(19) **Europäisches Patentamt**

**European Patent Office**

**Office européen des brevets**

(11) **EP 1 344 923 A2**

(12) **EUROPEAN PATENT APPLICATION**

(43) Date of publication:
**17.09.2003 Bulletin 2003/38**

(51) Int Cl.7: **F02D 41/40**

(21) Application number: **03004837.5**

(22) Date of filing: **05.03.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **11.03.2002 JP 2002065247**

(71) Applicant: **Mitsubishi Jidosha Kogyo Kabushiki Kaisha**
**Tokyo 108-8410 (JP)**

(72) Inventors:
• **Shigahara, Kei, Mitsubishi Jidosha Kogyo K.K.**
  **Minato-ku, Tokyo (JP)**
• **Hata, Michihiro, Mitsubishi Jidosha Kogyo K.K.**
  **Minato-ku, Tokyo (JP)**

(74) Representative: **VOSSIUS & PARTNER**
**Siebertstrasse 4**
**81675 München (DE)**

(54) **Divided fuel injection control apparatus**

(57) There is provided a divided fuel injection control apparatus that is capable of setting maps based on variation in rail pressure caused by pilot injection, and interference of injection waveforms of the pilot injection and main injection caused by a delay in operation of fuel injection valves, and correcting the main target injection time according to the first correction value and a correction factor calculated from the maps to thereby offset the influence of the pilot injection. Therefore, it is possible to eradicate the influence of the pilot injection on the succeeding main injection to realize accurate fuel injection based on the target injection quantity, thus preventing various troubles even if error in injection quantity occurs.

FIG. 3

# Description

The present invention relates to a divided fuel injection control apparatus that provides control of fuel injection dividedly carried out a plurality of times by an internal combustion engine (hereinafter referred to as "engine").

An engine, which injects fuel directly into cylinders, such as a common rail type diesel engine is capable of injecting fuel in arbitrary timing a plurality of times per combustion. A divided fuel injection control apparatus applied to such an engine varies the number of times of fuel injection and the fuel injection timing according to the operating state of the engine. For example, the divided fuel injection control apparatus performs pilot injection before main injection to inhibit a rapid increase in combustion pressure in order to reduce noises, or performs after-injection after the main injection to reduce soot and the like in exhaust gases.

The above-mentioned conventional divided fuel injection control apparatus, however, may not achieve the total target injection quantity due to the influence of the preceding fuel injection on the succeeding fuel injection. Since such error in the fuel injection quality leads to torque fluctuations, the drivability is deteriorated.

It is therefore an object of the present invention to provide a divided fuel injection control apparatus that is capable of realizing accurate fuel injection based on the target fuel injection quantity. The invention can be achieved by the features defined in the claims.

Particularly, to attain the above object, the present invention provides a divided fuel injection control apparatus, comprising: fuel injection valves that inject fuel into respective cylinders of an internal combustion engine; and fuel supply device that supplies high-pressure fuel into the fuel injection valves; and control device that controls the opening and closing of the fuel injection valves to perform divided injection; wherein the control means comprises: correction setting device that sets a correction value based on a variation characteristic of fuel pressure of the fuel supply device caused by a preceding fuel injection in the divided injection; and correcting device that corrects a fuel injection quantity for a succeeding fuel injection based on the set correction value.

Actuating the fuel injection valves for the preceding fuel injection causes variation in the fuel pressure of the fuel supply means, and the variation in the fuel pressure influences the injection quantity in the succeeding fuel injection. Accordingly, a variation characteristic of the fuel pressure of the fuel supply means caused by the preceding fuel injection is identified in advance, and the correction value setting means sets such a correction value as to offset the influence of the variation in the fuel pressure according to the variation characteristic. As a result, it is possible to carry out the succeeding fuel injection with a proper injection quantity based on the correction value. The invention is described in more detail in connection with the drawings, in which:

FIG. 1 is a view showing the entire construction of a divided fuel injection control apparatus according to an embodiment of the present invention;
FIG. 2 is a block diagram of fuel injection control provided by an ECU;
FIG. 3 is a time chart showing how pilot injection and main injection are carried out;
FIG. 4 is a view showing test results representing the influence of the pilot injection on respective rail pressures;
FIG. 5 is view showing test results representing the influence of the pilot injection quantity on the rail pressure when the pilot injection quantity is varied;
FIG. 6 is a time chart showing the case where the injection waveforms of the pilot injection and the main injection interfere;
FIG. 7 is a view showing test results of correction values required for the main injection in respective operating ranges; and
FIG. 8 is a characteristic drawing showing the fuel injection quantity in the case where the injection interval between the preceding injection and the succeeding injection is varied.

A description will hereunder be given of a divided fuel injection control apparatus for a common rail type diesel engine according to an embodiment of the present invention.

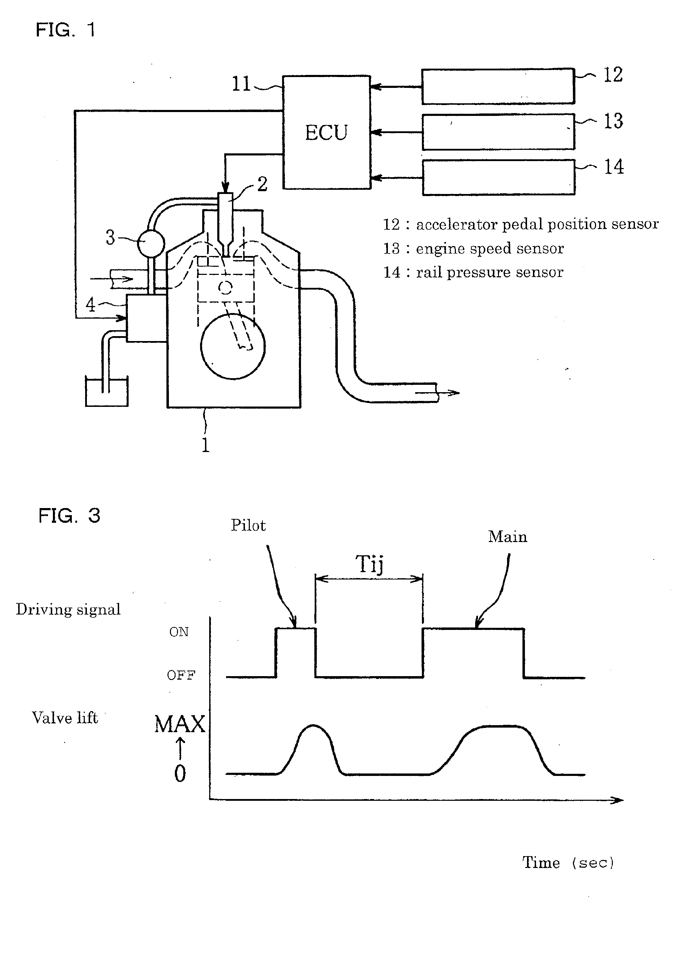

FIG. 1 is a view showing the entire construction of the divided fuel injection control apparatus according to the present embodiment. The divided fuel injection control apparatus according to the present embodiment is constructed such that fuel injection valves 2 are provided for respective cylinders of a diesel engine 1, and pressurized fuel is supplied to each of the fuel injection valves 2 from a fuel injection pump 4 via a common rail 3 (fuel supply means) common to all of the cylinders.

On the other hand, an input/output device, not shown; a storage device (e.g. ROM and RAM) used for storing control programs, control maps, and so forth; a central processing unit (CPU); and an electronic control unit (ECU) 11 provided with a timer counter and others are installed in a vehicle compartment. A variety of sensors such as an accel pedal position sensor (APS) 12 that detects the accel pedal position $\theta_{APS}$, an engine speed sensor 13 that detects the engine speed Ne, and a rail pressure sensor 14 that detects the common rail pressure Pcr are connected to the input side of the ECU 11, and a variety of devices such as the fuel injection valves 2 and the fuel injection pump 4 are connected to the output side of the ECU 11.

The ECU 11 determines the injection timing, the injection quantity, the rail pressure of the common rail 3, or the like according to information supplied from the above-mentioned sensors, and actuates the fuel injection valves 2 and the fuel injection pump 4 according to the determination result so as to operate the engine 1. In the present embodiment, preliminary fuel injection (pilot injection) is performed before principal fuel injection (main injection) so as to inhibit noises from increasing due to a rapid increase in combustion pressure. A description will now be given of the summary of fuel injection control provided on this occasion.

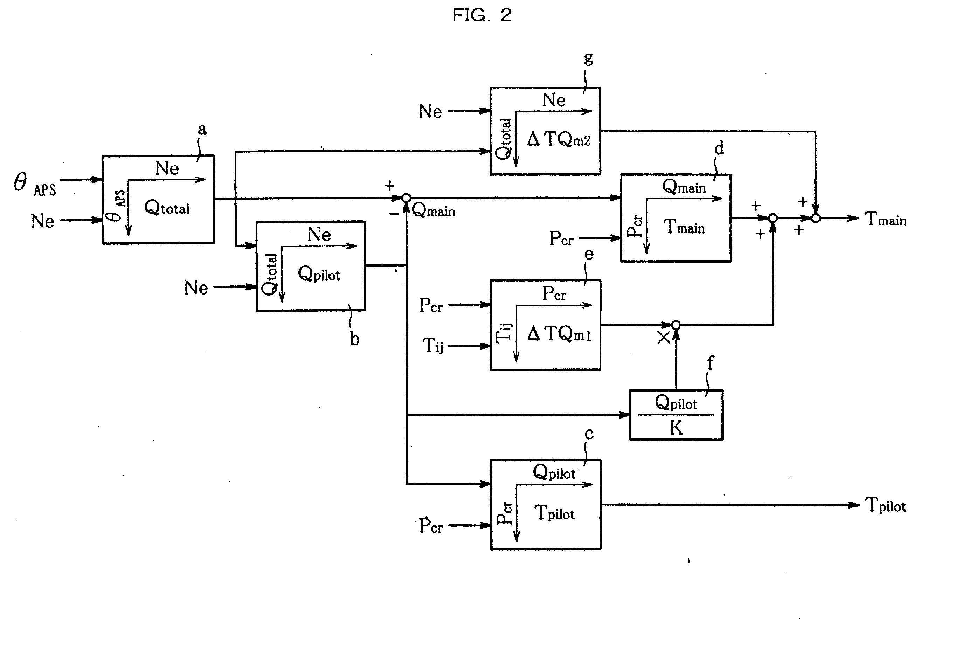

FIG. 2 is a block diagram of fuel injection control provided by the ECU 11. First, a total target injection quantity Qtotal is calculated from a map a based on the accel pedal position $\theta_{APS}$ and the engine speed Ne. A pilot target injection quantity Qpilot is calculated from a map b based on the total target injection quantity Qtotal and the engine speed Ne. A pilot target injection time Tpilot is calculated from a map c based on the pilot target injection Qpilot and the rail pressure Pcr. Further, a main target injection quantity Qmain is found by subtracting the pilot target injection quantity Qpilot from the target injection quantity Qtotal, and a main target injection time Tmain is then calculated from a map d based on the main target injection quantity Qmain and the rail pressure Pcr.

The above described processing is performed in the same manner as in the conventional fuel injection control, and the present embodiment is further characterized in that the main target injection time Tmain is corrected so as to offset the influence of the pilot injection on the main injection. A description will now be given of this characteristic of the present embodiment.

An injection interval Tij between the pilot injection and the main injection is calculated based on the total target injection quantity Qtotal and the engine speed Ne, for example, and a first correction value $\Delta$TQm1 is calculated from a map e based on the injection interval Tij and the rail pressure Pcr (correction setting device). It should be noted that the rail pressure Pcr applied on this occasion is a value detected before the pilot injection and not a value varied by the pilot injection described later. Further, a correction factor K is calculated from a map f based on the pilot target injection quantity Qpilot (correction setting device). The first correction value $\Delta$TQm1 is multiplied by the correction factor K, and the resulting value is added to the main target injection time Tmain (correcting device 22). The first correction value $\Delta$TQm1 and the correction factor K are intended to offset the influence of the pilot injection on the main injection, and a detailed description thereof will be given later.

On the other hand, a second correction value $\Delta$TQm2 is calculated from a map g based on total target injection quantity Qtotal and the engine speed Ne, and the second correction value $\Delta$TQm2 is added to the main target injection time Tmain. The second correction value $\Delta$TQm2 is for matching, and is intended to improve the drivability by making a subtle correction, which would not be realized only by using the first correction value $\Delta$TQm1 and the correction factor K.

Specifically, the main target injection time Tmain is corrected according to the following expression (1):

$$Tmain \leftarrow Tmain + (\Delta TQm1 \times K) + \Delta TQm2 \qquad (1)$$

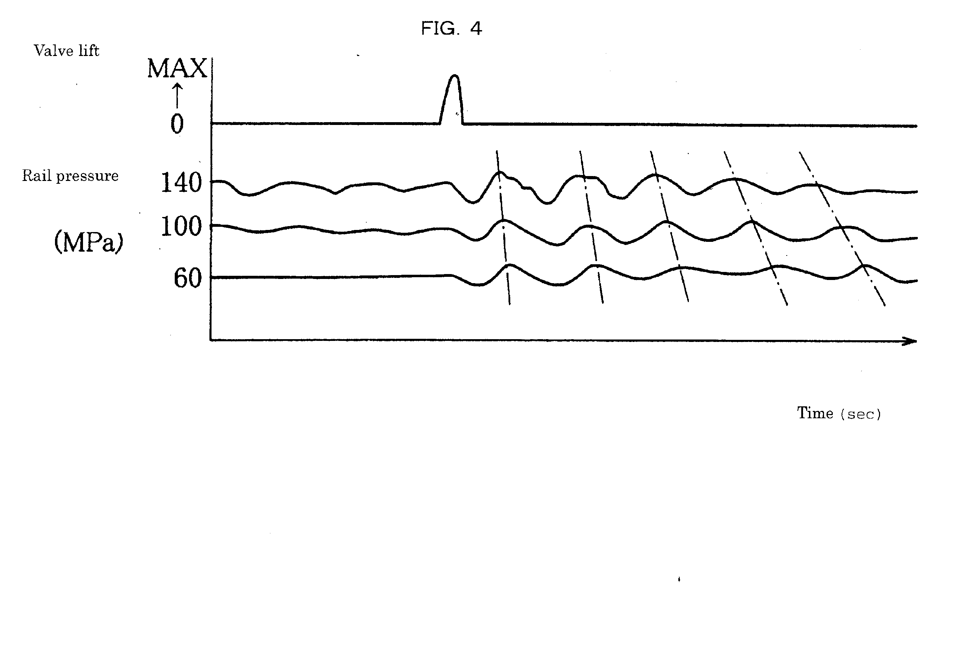

The main target injection time Tmain thus corrected is applied to the actual fuel injection control. As shown in FIG. 3, when fuel is injected into each cylinder, the main injection is started upon the lapse of a period of time corresponding to the injection interval Tij after the pilot injection, thus achieving the total target injection quantity Qtotal (control means).

A description will now be given of how the first correction value $\Delta$TQm1 and the correction factor K are set. As shown in FIG. 8, the total injection quality and the net mean effective pressure are varied in the case where an injection interval between the preceding fuel injection and the succeeding fuel injection is varied.

It would appear that this is caused by variation of common rail pressure, interference of injection waveforms, variation of pressure balance inside injection valves, residual magnetic field, and so forth. For example, the variation of the common rail pressure caused by the preceding fuel injection varies the fuel injection quantity in the succeeding fuel injection, leading to an error in the total injection quality. Also, the interference of the injection waveforms of the preceding fuel injection and the injection waveform due to a delay in the operation of the fuel injection valves causes error in the total fuel injection quantity. Since an error in the fuel injection quantity leads to torque fluctuations, the drivability is deteriorated, and moreover, if there is a deviation between the target injection quantity and the real fuel injection quantity such as an excess air ratio estimating process and an EGR control process using the target injection quantity as a parameter cannot be correctly performed.

In consequence, it is believed that the influence of the preceding pilot injection on the main injection is caused by the following two factors.

1) The first factor is the variation in the rail pressure Pcr. Actuating the fuel injection valve 2 for the pilot injection causes variation in the rail pressure Pcr, and the variation in the rail pressure Pcr influences the main injection quantity. The variation in the rail pressure Pcr may occur not only in the case where the pilot injection is really performed but also in the case where the internal pressure balance varies due to the actuation of the fuel injection valve 2 even if the pilot injection is not performed.

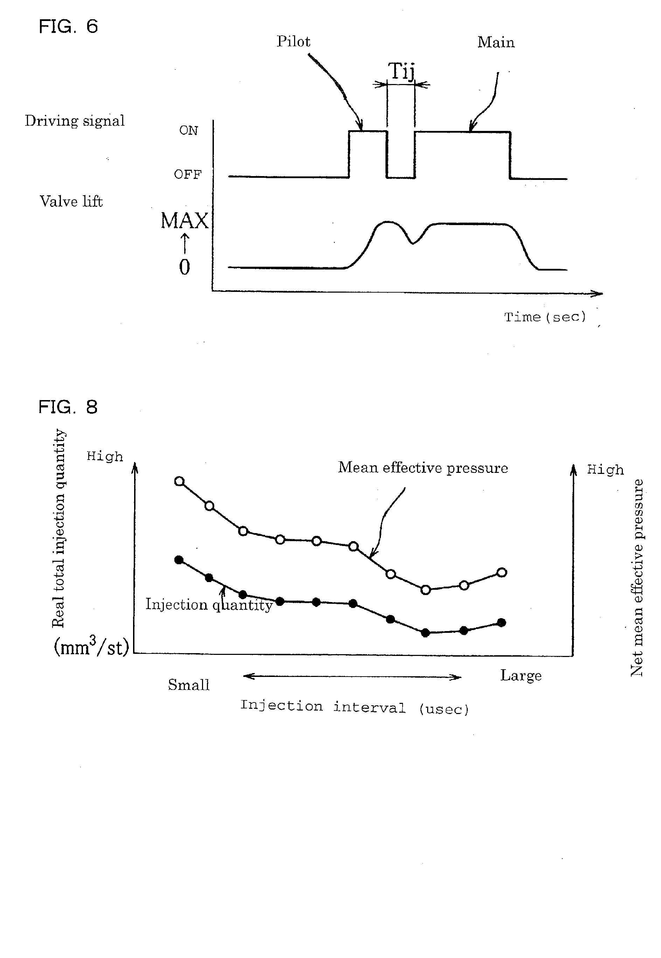

2) The second factor is a delay in the operation of the fuel injection valve 2. As shown in FIG. 6, in the case where a driving signal for the main injection is provided before the fuel injection valve 2 operated for the pilot injection is fully closed and in other cases, the injection waveforms of the pilot injection and the main injection interfere due to the internal pressure balance, residual magnetic field on coils, inertia of moving parts, and so froth to thus increase the substantial total injection quantity. Further, even after the fuel injection valve 2 operated for the pilot injection is fully closed, the interference of the injection waveforms occurs due to the internal pressure balance, the residual magnetic field, and so forth inside the fuel injection valve 2 to increase the total fuel injection quantity.

Regarding the first factor, the influence of variation in the rail pressure Pcr on the main injection can be offset basically by correcting the main target injection time Tmain in a direction opposite to the direction in which the rail pressure Pcr varies at the start of the main injection. For example, if the rail pressure Pcr varies in a direction to decrease at the start of the main injection, the main target njection time Tmain is corrected in a direction to increase so as to offset a deficiency in the main injection quantity. Conversely, if the rail pressure Pcr varies in a direction to increase, the main target injection time Tmain is corrected in a direction to decrease so as to inhibit the main injection quantity from becoming excessive.

FIG. 4 shows the results of tests assuming three rail pressures Pcr. As shown in FIG. 4, all of the three rail pressures Pcr gradually decrease due to pulsation after the pilot injection, and as indicted by alternate short and long dash lines connecting peaks, the higher the rail pressure Pcr is, the shorter is the variation cycle. Thus, the rail pressure Pcr during the main injection can be estimated based on the rail pressure Pcr at the present time point and the time elapsed after the completion of the pilot injection (i.e. the injection interval Tij), and it is therefore possible to make such a correction as to offset the influence of the rail pressure Pcr in the main injection.

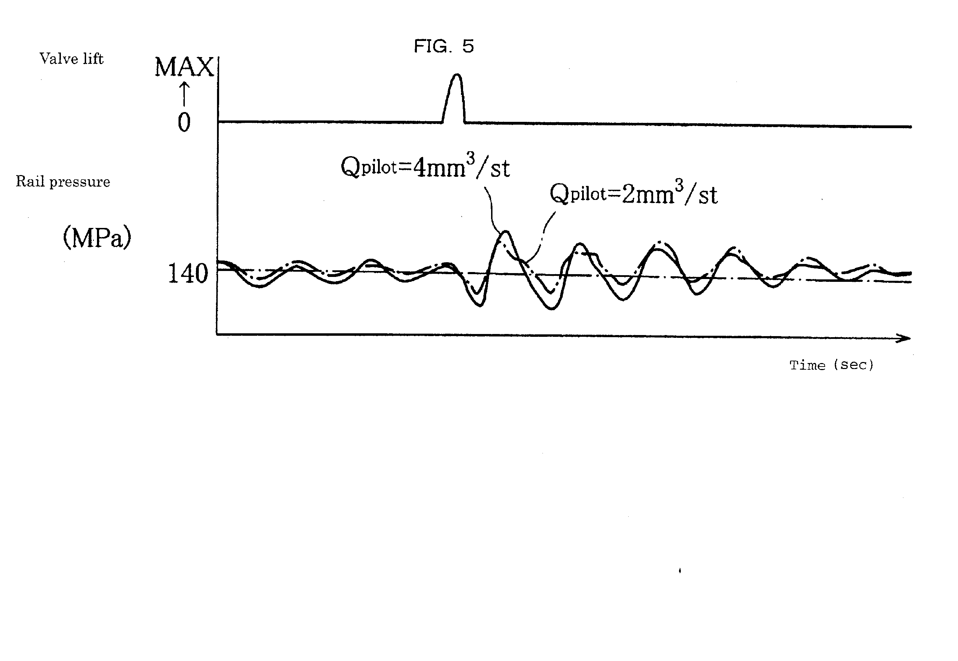

The test results for the influence of the pilot injection quantity Qpilot on the rail pressure Pcr in FIG. 5 show that the amplitude of pulsation is higher in the case where the pilot injection quantity Qpilot is large (4 $mm^3$/st) than in the case where the pilot injection quantity Qpilot is small (2 $mm^3$/st), and this means that a larger pilot injection quantity Qpilot influences the rail pressure Pcr to a larger degree. For this reason, the pilot injection quantity Qpilot as well as the rail pressure Pcr and the injection interval Tij should be taken into consideration to estimate the rail pressure Pcr during the main injection.

Regarding the second factor, as the injection interval Tij decreases, the injection waveforms of the pilot injection and the main injection interfere to a larger degree to increase the total injection quantity Qtotal. For this reason, the influence of the second factor can be offset by correcting the main injection quantity Qmain in a direction to become smaller as the injection interval becomes shorter Tij.

Accordingly, a map used for calculating the first correction $\Delta$TQm1 is set based on the variation characteristic of the rail pressure Pcr according to the rail pressure Pcr and the injection interval Tij as described with reference to FIG. 4 and the interference characteristic of the injection waveforms according to the injection interval Tij as described with reference to FIG. 6, and the first correction value $\Delta$TQm1 that enables the influences thereof to be offset is calculated from the map.

Further, a map used for calculating the correction factor K is set based on the variation characteristic of the rail pressure Pcr according to the pilot injection quantity Qpilot as described with reference to FIG. 5, and the correction factor K that enables the influence thereof to be offset is calculated from the map.

On the other hand, the inventors of the present invention conducted tests to measure correction values required for the main injection when the engine speed Ne, rail pressure Pcr, pilot injection quantity Qpilot, net mean effective pressure Pe, and injection interval Tij are varied.

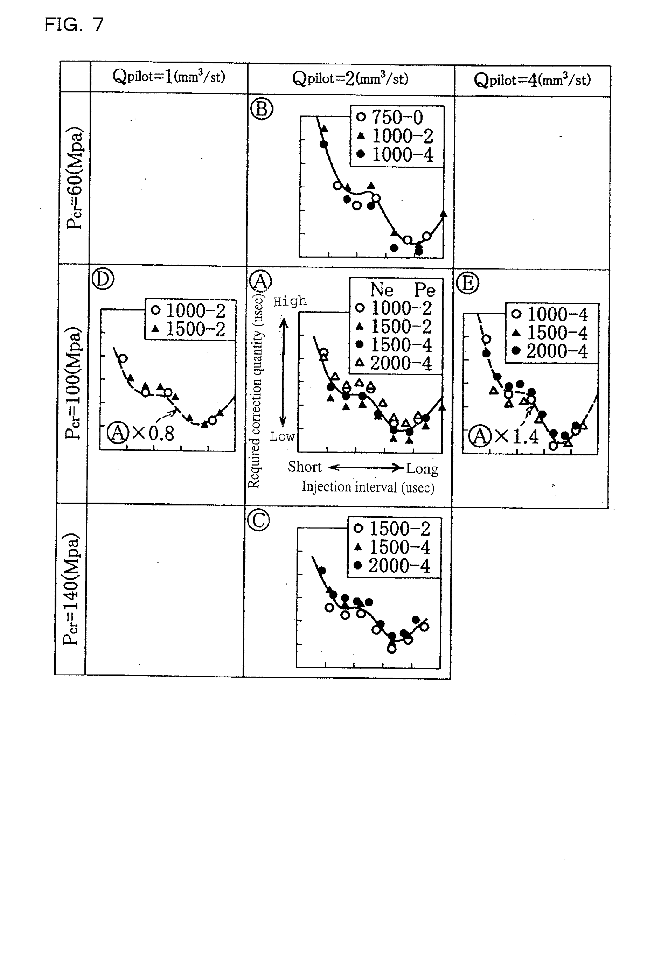

In FIG. 7, a characteristic A represents required correction values with respect to respective injection intervals in the case the engine speed Ne is set to 1000 rpm and the net mean effective pressure Pe is set to 2 (as indicated by mark "○"), the case where the engine speed Ne is set to 1500 rpm and the net mean effective pressure Pe is set to 2 (as indicated by mark "▲"), the case where the engine speed Ne is set to 1500 rpm and the net mean effective pressure Pe is set to 4 (as indicated by mark "●"), and the case where the engine speed Ne is set to 2000 rpm and the net mean effective pressure Pe is set to 4 (as indicated by mark "△") with the rail pressure Pcr being set to 100 Mpa and the pilot injection Qpilot being set to 2 $mm^3$/st. In FIG. 7, solid lines indicate mean values of required correction values. Since the required correction values are derived from actual tests, the required corrections reflects not only the variation in the rail pressure Pcr as the above-mentioned first factor but also a delay in the operation of the fuel injection valve 2 as the above-mentioned second factor.

As described above, the required correction value greatly varies according to the injection interval Tij indicated by a horizontal axis but exhibits substantially the same characteristic even if the engine speed Ne and the net mean effective pressure Pe are varied, and this reveals that the required correction hardly depends on the engine speed Ne and the net mean effective pressure Pe.

In FIG. 7, a characteristic B represents required correction values in the case where the engine speed Ne is set to 750 rpm and the net mean effective pressure Pe is set to 0 (as indicated by mark "○"), the case where the engine speed Ne is set to 1000 rpm and the net mean effective pressure Pe is set to 2 (as indicated by mark "▲"), the case where the engine speed Ne is set to 1000 rpm and the net mean effective pressure Pe is set to 4 (as indicated by mark "●") with the rail pressure Pcr being set to 60 Mpa and the pilot injection Qpilot being set to 2 mm$^3$/st. In FIG. 7, a characteristic C represents required correction values in the case where the engine speed Ne is set to 1500 rpm and the net mean effective pressure Pe is set to 2 (as indicated by mark "o"), the case where the engine speed Ne is set to 1500 rpm and the net mean effective pressure Pe is set to 4 (as indicated by mark "▲"), the case where the engine speed Ne is set to 2000 rpm and the net mean effective pressure Pe is set to 4 (as indicated by mark "●") with the rail pressure Pcr being set to 140 Mpa and the pilot injection Qpilot being set to 2 mm$^3$/st.

Concisely, it can be assumed that the test conditions are varied by increasing and decreasing the rail pressure Pcr of the characteristic A. The comparison between the characteristics A, B, and C reveals that the required correction varies greatly according to the rail pressure Pcr. As described above, the test results proved that the first correction value ΔTQm1 could be properly set according to the map e (the rail pressure Pcr and the injection interval Tij).

On the other hand, in FIG. 7, a characteristic D represents required correction values in the case where the engine speed Ne is set to 1000 rpm and the net mean effective pressure Pe is set to 2 (as indicated by mark "○") and the case where the engine speed Ne is set to 1500 rpm and the net mean effective pressure Pe is set to 2 (as indicated by mark "▲") with the rail pressure Pcr being set to 100 Mpa and the pilot injection Qpilot being set to 2 mm$^3$/st. Further, in FIG. 7, a characteristic E represents required correction values in the case where the engine speed Ne is set to 1000 rpm and the net mean effective pressure Pe is set to 4 (as indicated by mark "○"), the case where the engine speed Ne is set to 1500 rpm and the net mean effective pressure Pe is set to 4 (as indicated by mark "∆"), and the case where the engine speed Ne is set to 2000 rpm and the net mean effective pressure Pe is set to 4 (as indicated by mark "●") with the rail pressure Pcr being set to 100 Mpa and the pilot injection Qpilot being set to 4 mm$^3$/st.

Concisely, it can be assumed that the test conditions are varied by increasing and decreasing the pilot injection quantity Qpilot of the characteristic A. The comparison between the characteristics A, D, and E reveals that the required correction varies greatly according to the pilot injection quantity Qpilot but exhibits substantially the same overall characteristic with respect to the injection interval Tij. Thus, as indicated by broken lines in the characteristics D and E, multiplying the correction values in the characteristic A by a coefficient (0.8 or 1.4), it is possible to find the required corrections approximate to values derived from tests even if the pilot injection quantity Qpilot varies. The test results proved that the correction factor K could be properly set according to the map f (the pilot injection quantity Qpilot).

As described above, the divided fuel injection control apparatus according to the present embodiment corrects the main target injection time Tmain based on the first correction value ΔTQm1 and the correction factor K so as to offset the influence of variation in the rail pressure Pcr during the pilot injection on the main injection and the influence of interference of the injection waveforms caused by a delay in the operation of the fuel injection valves 2 on the main injection. Therefore, it is possible to eradicate the influence of the pilot injection on the main injection, always perform proper main injection regardless of whether the pilot injection is performed or not, and therefore realize accurate fuel injection based on the total target injection quantity. As a result, it is possible to prevent the following various troubles caused by error in fuel injection quantity: the drivability is deteriorated due to torque fluctuations, an excess air ratio estimating process based on the target total injection quantity Qtotal and the target total injection quantity Qtotal cannot be properly performed, and an EGR control process using the target total injection quantity Qtotal as a parameter cannot be properly performed.

Incidentally, although the map b described with reference to FIG. 2 includes an operating range where the pilot target injection quantity Qpilot is set to 0 or less and the pilot injection is not performed, a driving signal is continuously transmitted to the fuel injection valve 2 even in this operating range. This is intended to vary the rail pressure Pcr only by actuating the fuel injection valve 2 even if fuel is not really injected as mentioned in the above description of the first factor. The reason why the fuel injection valve 2 is actuated in this operating range is that stopping actuating the fuel injection valves 2 with the stop of the pilot injection causes torque fluctuations due to a change in variation of the rail pressure Pcr.

It is to be understood, however, that there is no intention to limit the invention to the above described embodiments, but certain changes and modifications may be possible within the scope of the appended claims. For example, although in the above described embodiments, the divided fuel injection control apparatus is applied to the diesel engine, the present invention is not limited to this, but the present invention may be applied to, for example, a cylinder injection type gasoline engine that injects fuel directly into cylinders.

Further, although in the above described embodiments, the main target injection time Tmain is corrected using the first correction value ΔTQm1, which is found from the rail pressure Pcr and the injection interval Tij, and the correction factor K, which is found from the pilot target injection quantity Qpilot, the present invention is not limited to this, but all of the rail pressure Pcr, injection interval Tij, and pilot target injection quantity Qpilot should not be taken into consideration but any of these requirements may be omitted. Alternatively, other requirements may be added to these requirements. For example, although the engine speed Ne and the net mean effective pressure Pe do not greatly influence required corrections as described with reference to FIG. 7, making an additional correction based on such requirements enables more accurate fuel injection.

Further, although in the above described embodiments, the injection quantity is corrected to eradicate the influence of the pilot injection on the main injection in order to reduce noises, the number of times of fuel injection, the purpose of fuel injection, and so forth are not restricted insofar as fuel is dividedly injected a plurality of times. For example, the present invention may be applied in the case where the pilot injection is carried out a plurality of times or in the case where after-injection is carried out immediately after the main injection. The after-injection is intended to reduce soot in exhaust gases by expediting combustion of HC (hydrocarbon) in combustion gases during the main injection, but there may be error in injection quantity during the after-injection due to the influence of the main injection. Thus, accurate fuel injection can be realized by correcting the after-injection quantity as is the case with the main injection of the above described embodiments.

## Claims

1. A divided fuel injection control apparatus, which comprises fuel injection valves (2) that inject fuel into respective cylinders of an internal combustion engine, fuel supply means (3) for supplying high-pressure fuel into said fuel injection valves, and control means (11) for controlling opening and closing of said fuel injection valves to perform divided injection **characterized by** comprising:

    correction setting means (20) for setting a correction value based on a variation characteristic of fuel pressure of said fuel supply means caused by a preceding fuel injection in the divided injection; and

    correcting means (22) for correcting a fuel injection quantity for a succeeding fuel injection based on the set correction value.

2. A divided fuel injection control apparatus according to claim 1, wherein said correction setting means (20) sets a correction value based on an interference characteristic of injection waveforms between the preceding fuel injection and the succeeding fuel injection in addition to the variation characteristic of the fuel pressure.

3. A divided fuel injection control apparatus according to claim 1 or 2, wherein said correction setting means (20) sets a correction value based on at least one selected from the group consisting of a fuel pressure of said fuel supply means, a fuel quantity in the preceding fuel injection, and an injection interval between the preceding fuel injection and the succeeding fuel injection.

4. A divided fuel injection control apparatus according to any of claims 1 to 3, wherein said correction setting means (20) estimates a fuel pressure for the succeeding fuel injection according to a fuel pressure in the preceding fuel injection and an injection interval between the preceding fuel injection and the succeeding fuel injection, and sets a correction value to be applied to a fuel injection quantity so as to offset an influence of the estimated fuel pressure in the succeeding fuel injection.

5. A divided fuel injection control apparatus according to any of claims 1 to 4, wherein said correction setting means (20) estimates a fuel quantity in the succeeding fuel injection based on a fuel pressure in the preceding fuel injection, a fuel quantity in the preceding fuel injection, and an injection interval between the preceding fuel injection and the succeeding fuel injection, and sets a correction value to be applied to a fuel injection quantity so as to offset an influence of the estimated fuel pressure in the succeeding fuel injection.

6. A divided fuel injection control apparatus according to any of claims 1 to 5, wherein said correction setting means (20) makes a correction such that a fuel quantity in the succeeding fuel injection is decreased as an interval between the preceding fuel injection and the succeeding fuel injection becomes shorter.

7. A divided fuel injection control apparatus according to any of claims 1 to 6, wherein said correction setting means (20) sets such a correction value as to increase the fuel injection quantity so that a deficiency in fuel injection quantity in the succeeding fuel injection is offset when a fuel pressure is varied in a direction to decrease at start of the succeeding fuel injection, and sets such a correction value as to decrease the fuel injection quantity so that a fuel injection quantity in the succeeding fuel injection is inhibited from becoming excessive when the fuel pressure varies in a direction to increase at start of the succeeding fuel injection.

8. A divided fuel injection control apparatus according to any one of claims 1 to 7, wherein said correcting means (22) makes a correction based on a total fuel quantity in the preceding fuel injection and the succeeding fuel injection and an engine speed in addition to the correction made based on the correction value set by said correction setting means (20) based on the variation characteristic of the fuel pressure.

## FIG. 1

ECU — 11

12

13

14

12 : accelerator pedal position sensor
13 : engine speed sensor
14 : rail pressure sensor

## FIG. 3

Pilot

Main

$T_{ij}$

Driving signal

ON

OFF

Valve lift

MAX

↑
0

Time (sec)

FIG. 2

EP 1 344 923 A2

FIG. 4

Valve lift

Rail pressure

(MPa)

Time (sec)

EP 1 344 923 A2

FIG. 5

Valve lift

MAX
↑
0

Rail pressure

(MPa)

$Q_{pilot} = 4mm^3/st$

$Q_{pilot} = 2mm^3/st$

140

Time (sec)

EP 1 344 923 A2

FIG. 6

FIG. 8

FIG. 7